# EUROPÄISCHE PATENTSCHRIFT

(11) **EP 1 664 177 B1**
(45) Veröffentlichungstag und Bekanntmachung des Hinweises auf die Patenterteilung: **13.06.2007**
(21) Anmeldenummer: 04742000.5
(22) Anmeldetag: 16.07.2004
(51) Int. Cl.: C08K 5/101, C09D 7/12, C09D 5/02, C09J 11/06, C08J 3/03, C07C 69/78

(54) **VERWENDUNG VON ISONONYLBENZOATEN ALS FILMBILDEHILFSMITTEL**
USE OF ISONONYL BENZOATE AS A FILM-FORMING AGENT
UTILISATION DE BENZOATES D'ISONONYLE COMME AGENTS FILMOGENES

(30) Priorität: 09.09.2003 DE 10341428
(43) Veröffentlichungstag der Anmeldung: 07.06.2006
(73) Patentinhaber: Oxeno Olefinchemie GmbH, 45772 Marl (DE)
(72) Erfinder: GRASS, Michael, 45721 Haltern am See (DE); KOCH, Jürgen, 45721 Haltern am See (DE)
(74) Vertreter: Hirsch, Hans-Ludwig
(86) Internationale Anmeldenummer: PCT/EP2004/051523
(87) Internationale Veröffentlichungsnummer: WO 2005/026249

(56) Entgegenhaltungen:
- EP-A- 1 354 867
- WO-A-01/29140
- WO-A-89/00173
- US-A- 5 236 987

## Beschreibung

Die vorliegende Erfindung betrifft die Verwendung von Isononylestern der Benzoesäure als Filmbildehilfsmittel in Kompositionen wie Dispersionsfarben, Mörteln, Putzen, Klebstoffen und Lacken sowie Kompositionen, die filmbildende Polymere und Isononylester der Benzoesäure aufweisen.

Wässrige Dispersionen von filmbildenden Homo-, Co- oder Terpolymeren können z. B. als Bindemittel für Anstrichstoffe für den Innen- und Außenbereich eingesetzt werden. Ein wichtiges Kriterium für die Verarbeitung einer Farbe ist die Mindestfilmtemperatur (MFT), die unterhalb der Umgebungstemperatur, bei Außenfarben üblicherweise bei ca. 5 °C liegen muss, damit eine gute Verstreichbarkeit gewährleistet wird. Das Einstellen der Mindestfilmtemperatur kann prinzipiell auf zwei unterschiedliche Arten erfolgen.

Die erste Möglichkeit der Einstellung der MFT besteht in der Co- oder Terpolymerisation mit Monomeren, die auf Grund ihrer Struktur zur Absenkung der Glasübergangstemperatur T_{G} und somit der MFT beitragen können (innere Weichmachung). Als geeignete Monomere können z.B. Acrylate dienen.

In der Regel ist jedoch die Zugabe von Filmbildehilfsmitteln zur Absenkung der MFT die preisgünstigere Methode. Ähnlich wie bei der äußeren Weichmachung von PVC wird hier die MFT in Abhängigkeit von Effizienz und Menge des Filmbildehilfsmittels deutlich reduziert.

In Europa werden als Filmbildehilfsmittel überwiegend 2,2,4-Trimethyl-1,3-pentandiolmonoisobutyrat (z.B. TEXANOL, Fa. Eastman) und Glycolether vom Typ Dipropylenglycol-n-butylether (DPnB) oder Tripropylenglycol-n-butylether (TPnB) oder auch Dimethylphthalat (DMP) eingesetzt. TEXANOL war lange Zeit der Standard unter den Filmbildehilfsmitteln. Allerdings ist der vergleichsweise hohe Dampfdruck dieses Produkts nicht mehr mit den immer stringenteren Regulierungen bezüglich der flüchtigen, organischen Inhaltsstoffe (VOC) vereinbar.

Insbesondere in Deutschland spielt das Gütesiegel "Blauer Engel" (RAL-UZ 102) für Innenraumfarben für den Endverbrauchermarkt eine immer wichtigere Rolle. In Kombination mit einer vom Verband der Lackindustrie e.V. heraus gegebenen "Richtlinie zur Deklaration von Inhaltsstoffen in Bautenlacken, Bautenfarben und verwandten Produkten" (VdL-RL 01, 2. Revision, April 2000) ergibt sich, dass die Verwendung der meisten der oben genannten Produkte prohibitiv für die Vergabe dieses Umweltzeichens ist. So scheiden DPnB und TEXANOL schon wegen des geringen Siedepunktes (< 250 °C) aus. Glycolether und Phthalate werden von der VdL-RL 01 (2. Revision, April 2000) als "Weichmacher" eingestuft. Produkte, die diese "Weichmacher" in Mengen größer 1 g/l im Fertigprodukt aufweisen, sind von der Vergabe des Blauen Engels ausgeschlossen.

Es besteht daher die Notwendigkeit zur Entwicklung weiterer, insbesondere kosteneffizienter Produkte, die eine starke Absenkung der MFT auch bei niedrigen Konzentrationen ermöglichen und die gleichzeitig einen so niedrigen Dampfdruck aufweisen, dass die genannten Bestimmungen eingehalten werden können.

Die Verwendung von Benzoesäureestern aus Alkoholen mit einer Kettenlänge von 8 bis 13 C-Atomen für den Einsatz als Weichmacher für PVC ist in DE 19 62 500 beschrieben.

In US 5,236,987 wird auch die Verwendung anderer Benzoesäureester mit Kettenlängen von C₈ bis C₁₂ erwähnt. Aus dem Stand der Technik ist die Verwendung solcher Monoalkylbenzoate wie beispielsweise 2-Ethylhexylbenzoat (WO 01/29140) oder Isodecylbenzoat (US 5,236,987) als Filmbildehilfsmittel bekannt. Diese zeichnen sich gegenüber dem Standard TEXANOL durch geringere Flüchtigkeit und deutlich verminderten Geruch aus.

In der noch nicht offengelegten Anmeldung DE 102 17 186 ist die Verwendung isomerer Nonylbenzoate mit einem Anteil von weniger als 10 % 3,5,5-Trimethylhexylbenzoat als Flexibilisierungsmittel für Lacke, Farben, Klebstoffe oder Klebstoffkomponenten und als Weichmacher für PVC beschrieben.

Aufgabe der vorliegenden Erfindung war die Bereitstellung von Filmbildehilfsmitteln, die eine geringe Flüchtigkeit aufweisen und die einfach und damit preiswert hergestellt werden können, und von Kompositionen, die diese Filmbildehilfsmittel aufweisen. Insbesondere sollten die Filmbildehilfsmittel geeignet sein, in Farben eingesetzt zu werden, die dann den Anforderungen der VdL-RL O1, 2. Revision, April 2000 gerecht werden.

Überraschenderweise wurde gefunden, dass Ester der Benzoesäure mit isomeren C₉-Alkoholen (Isononanol) gegenüber den quasi-homologen 2-Ethylhexyl- und Isodecylbenzoat verbesserte Eigenschaften bei der Verwendung als Filmbildehilfsmittel in wässrigen Bindemitteldispersionen zeigen. Gegenüber 2-Ethylhexylbenzoat zeigt Isononylbenzoat trotz eines höheren Siedepunktes und der über Thermogravimetrie nachweisbaren geringeren Flüchtigkeit eine zumindest vergleichbar gute Verdunstung aus Beschichtungen bei zumindest gleicher Effizienz (Absenkung der Mindestfilmtemperatur). Im Vergleich zu Isodecylbenzoat zeigt Isononylbenzoat eine bessere Absenkung der MFT und insbesondere ein deutlich besseres Verdunstungsverhalten (schnelleres Trocknen möglich). Dieser Zusammenhang war besonders überraschend, da anzunehmen war, dass mit der steigenden Kettenlänge des Alkohols nicht nur die Siedetemperatur steigt bzw. die Flüchtigkeit sinkt, sondern sich auch das Verdunstungsverhalten aus Beschichtungen auf Grund des höheren Siedepunktes verschlechtert. Überraschenderweise wurde aber gefunden, dass bezüglich dieser Größen bei Isononylbenzoat in der homologen Reihe C₈-, C₉-, C₁₀-Benzoat ein Optimum zu liegen scheint.

Gegenstand der vorliegenden Erfindung sind deshalb Kompositionen, welche eine wässrige Dispersion zumindest eines filmbildenden Polymeren ausgewählt aus Homo-, Co- oder Terpolymeren und zumindest eines Filmbildehilfsmittels aufweisen, welche dadurch gekennzeichnet sind, dass sie als zumindest ein Filmbildehilfsmittel Benzoesäureisononylester, welches in einer Konzentration von 0,1 bis 30 Massen-% bezogen auf das Trockengewicht des Polymeren vorhanden ist, aufweisen.

Ebenfalls Gegenstand der vorliegenden Erfindung ist die Verwendung einer oder mehrerer der erfindungsgemäßen Kompositionen als Anstrichfarbe, Klebstoff oder zur Herstellung von Anstrichfarben oder Klebstoffen.

Ein gutes Filmbildehilfsmittel muss im wesentlichen vier wichtige Kriterien erfüllen. Zunächst muss es eine hohe Verträglichkeit gegenüber dem Basis-Polymer aufweisen, oft als Bindemittel bezeichnet, das heißt, es darf nicht zur Entmischung kommen. Es muss weiterhin eine hohe Effizienz hinsichtlich der Absenkung der Mindestfilmtemperatur zeigen und die Flüchtigkeit sollte niedrig sein. Hierbei ist zu beachten, dass eine zu geringe Flüchtigkeit dazu führen könnte, dass das Filmbildehilfsmittel unverhältnismäßig lange an der Oberfläche haften bleiben und in der Folge Schmutz binden würde. Somit sollte ein guter Kompromiss hinsichtlich der Flüchtigkeit gefunden werden. Da in Fachkreisen bereits über eine Anhebung des minimalen Siedepunkts der Filmbildehilfsmittel auf 280 oder 300 °C als künftiges Kriterium für die Vergabe des "Blauen Engels" nachgedacht wird, scheinen Produkte mit einem Siedepunkt von knapp über 300 °C besonders geeignet zu sein.
Schließlich sollte die Wasserlöslichkeit sehr gering sein, damit das Filmbildehilfsmittel während des Trocknungsprozesses auf der Oberfläche der Partikel seine Wirksamkeit am effizientesten entfalten kann.

Isomere Nonylbenzoate erfüllen diese Kriterien mindestens gleich gut wenn nicht besser als die bisher bekannten bzw. im Markt eingesetzten Systeme. Gegenüber den Esteralkoholen (TEXANOL) oder den Glycolmonobutylethem (z.B. DOWANOL, Fa. Dow Chemical) besitzen sie den Vorteil der geringeren Wasserlöslichkeit bei vergleichbarer Effizienz. Der Siedebereich liegt oberhalb von 310 °C, z. B., wie im Beispiel ermittelt, im Bereich von 316 bis 326 °C. Im Gegensatz dazu weist z.B. 2-Ethylhexylbenzoat eine Siedetemperatur von ca. 297 °C (Herstellerangaben, Velsicol) auf. Gegenstand der vorliegenden Erfindung ist deshalb auch ein Filmbildehilfsmittel, welches z.B. zum Einsatz in einer erfindungsgemäßen Komposition geeignet ist, und ein Benzoesäureisononylester ist. Vorzugsweise ist das Filmbildehilfsmittel ein Benzoesäureisononylester, bei dem die durch Verseifung der isomeren Benzoesäureisononylester erhaltenen Nonylalkohole weniger als 10 Mol % 3,5,5-Trimethylhexanol enthalten.

Weiterhin ist das erfindungsgemäße Filmbildehilfsmittel auch als Reinigungsmittel oder als Inhaltsstoff von Reinigungsmitteln, insbesondere für Reinigungsmitteln zur Reinigung von Lackierstraßen geeignet.

Die erfindungsgemäße Komposition, welche das erfindungsgemäße Filmbildehilfsmittel aufweist, hat den Vorteil, dass sie insbesondere gegenüber 2-Ethylhexylbenzoat aufweisenden Kompositionen trotz des deutlich höheren Siedepunkts ein ebenso gutes Verdunstungsverhalten aus Beschichtungen und/oder Filmen zeigt, was zum schnellen Aushärten einer Farbe vorteilhaft ist Gegenüber Isodecylbenzoat aufweisenden Kompositionen zeigen Kompositionen, die den erfindungsgemäßen Benzoesäureisononylester (isomere Nonylester, Isononylbenzoat, INB) aufweisen, bei gleicher Konzentration eine bessere Absenkung der MFT. Die erfindungsgemäßen Kompositionen sind sehr leicht und preisgünstig herzustellen, da die Alkoholkomponente des INB, Isononanol, großtechnisch auf Basis von Naphtha in mehreren hunderttausend Tonnen pro Jahr hergestellt wird und nicht ein Benzoesäureester eingesetzt werden muss, der auf deutlich teureren, reinen Isomeren des Nonanols, wie zum Beispiel n-Nonanol, basiert.

Die erfindungsgemäße Verwendung von Benzoesäureisononylester als Filmbildehilfsmittel in Kompositionen sowie diese Kompositionen und deren Verwendung wird nachfolgend beispielhaft beschrieben, ohne dass die Erfindung auf diese Ausführungsformen beschränkt sein soll.

Die erfindungsgemäße Komposition, welche eine wässrige Dispersion zumindest eines filmbildenden Polymeren ausgewählt aus Homo-, Co- oder Terpolymeren und zumindest eines Filmbildehilfsmittels aufweist, zeichnet sich dadurch aus, dass sie als zumindest ein Filmbildehilfsmittel Benzoesäureisononylester, welches in einer Konzentration von 0,1 bis 30 Massen-%, vorzugsweise von 0,3 bis 20 Massen-%, besonders bevorzugt von 0,5 bis 10 Massen-% bezogen auf das Trockengewicht des Polymeren vorhanden ist, aufweist. Die Menge an Filmbildehilfsmittel ist abhängig von der für das Endprodukt angestrebten Mindestfilmtemperatur und der Mindestfilmtemperatur des unmodifizierten Polymeren. Bei Dispersionsfarben werden in der Regel Mindestfilmtemperaturen von unter 5 °C angestrebt.

Je nach Verwendungszweck der Komposition kann es vorteilhaft sein, wenn die Komposition in Dispersionsfarben von 0,5 bis 15, vorzugsweise von 0,5 bis 3 Massen-% und in Lacken von 5 bis 30 Massen-%, vorzugsweise von 15 bis 30 Massen-% jeweils bezogen auf das Trockengewicht des Polymeren (Bindemittels) aufweist.

Die Komposition weist vorzugsweise einen Benzoesäureisononylester auf, bei dem die durch Verseifung der isomeren Benzoesäureisononylester erhaltenen Nonylalkohole weniger als 10 Mol % 3,5,5-Trimethylhexanol enthalten. Die Verseifung der Benzoesäureester bzw. der weiteren, im folgenden noch genannten Ester kann nach üblichen Methoden durch Umsetzung mit alkalischen Medien erfolgen (siehe z. B. Ullmann's Enzyklopädie der Technischen Chemie, 5 Ed. A 10, S. 254-260).

Die Herstellung des in der erfindungsgemäßen Komposition als erfindungsgemäßes Filmbildehilfsmittel vorhandenen Benzoesäureisononylesters (Isomeres Nonylbenzoat, INB) wird im Folgenden beschrieben. Einsatzprodukt für die Herstellung des Benzoesäureisononylesters ist ein Gemisch isomerer Nonylalkohole sowie Benzoesäure. Das zur Herstellung des Benzoesäureisononylesters eingesetzte Gemisch von isomeren Nonylalkoholen wird häufig als Isononanol bezeichnet. Die bevorzugt eingesetzten Gemische (Isononanole) weisen eine hohe Linearität auf, die durch einen Anteil von weniger als 10 Mol % (0-10), bevorzugt weniger als 5 (0-5) Mol %, besonders bevorzugt weniger als 2 (0-2) Mol % an 3,5,5-Trimethylhexanol gekennzeichnet ist. Die Isomerenverteilung von Nonylalkohol-Gemischen wird durch die Art der Herstellung des Nonylalkohols (Isononanol) bestimmt. Die Isomerenverteilungen der Nonylreste können mit den üblichen, dem Fachmann geläufigen Meßmethoden wie NMR-Spektroskopie, GC- oder GC/MS-Spektroskopie ermittelt werden. Die gemachten Angaben beziehen sich auf alle im folgenden genannten Nonylalkohol-Gemische. Solche Nonylalkohole (Nonylalkohol-Gemische) sind kommerziell unter den CAS-Nummern 27458-94-2, 68515-81-1, 68527-05-9 oder 68526-84-1 erhältlich.

Isononanol wird durch Hydroformylierung von Octenen, die wiederum auf unterschiedliche Art erzeugt werden, hergestellt. Als Rohstoff hierzu dienen im allgemeinen technische C₄-Ströme, die zunächst alle isomeren C₄-Olefine neben den gesättigten Butanen und ggf. Verunreinigungen wie C₃- und C₅-Olefinen und acetylenischen Verbindungen enthalten. Durch Oligomerisierung dieses Olefingemisches erhält man vorwiegend isomere Octengemische neben höheren Oligomeren wie C₁₂- und C₁₆-Olefingemischen. Diese Octengemische werden zu den entsprechenden Aldehyden hydroformyliert und anschließend zum Alkohol hydriert.

Die Zusammensetzung, d. h. die Isomerenverteilung der technischen Nonanolgemische ist abhängig vom Ausgangsmaterial und von den Oligomerisierungs- und Hydroformylierungsverfahren. Zur Herstellung der erfindungsgemäßen Ester können alle diese Gemische eingesetzt werden. Bevorzugte Nonanolgemische sind diejenigen, die durch Hydroformylierung von C₈-Olefingemischen, erhalten durch Oligomerisierung von im Wesentlichem linearen Butenen an Nickelträgerkatalysatoren (z. B. OCTOL-Prozeß, OXENO Olefinchemie GmbH), in Gegenwart von bekannten Hydroformylierungskatalysatoren wie beispielsweise Rh (unmodifiziert oder mit Liganden) bzw. unmodifizierten Kobaltverbindungen und anschließender Hydrierung des entkatalysierten Hydrofonnylierungsgemisches gewonnen wurden. Dabei beträgt der Anteil von Isobuten im Ausgangsstoff, bezogen auf den Gesamtbutengehalt, weniger als 5 Gew.-%, vorzugsweise weniger als 3 Gew.-%, besonders bevorzugt weniger als 1 Gew.-%. Hierdurch wird erreicht, dass der Anteil stärker verzweigter Nonanol-Isomerer, u.a. auch der des 3,5,5-Trimethylhexanols, welches sich als wenig vorteilhaft gezeigt hat, deutlich zurück gedrängt wird und im Rahmen der bevorzugten Bereiche liegt.

Die erfindungsgemäße Komposition kann aber auch Benzoesäureisononylester aufweisen, die durch Veresterung von Benzoesäure mit einer kommerziell erhältlichen Alkoholmischung, die z.B. die CAS-Nummern 68551-09-7, 91994-92-2, 68526-83-0, 66455-17-2, 68551-08-6, 85631-14-7 oder 97552-90-4 aufweisen können, erhalten werden. Es handelt sich hier um Alkoholmischungen, die neben den genannten Isononylalkoholen auch Alkohole mit 7 bis 15 Kohlenstoffatomen (gemäß CAS-Definition) enthalten. Es werden also Benzoesäurealkylestergemische erhalten, die neben Benzoesäureisononylester weitere Alkylester aufweisen.

Die Herstellung von Benzoesäureisononylester, also die Veresterung der Benzoesäure mit einem Isononanolgemisch zu den entsprechenden Estern kann autokatalytisch oder katalytisch, beispielsweise mit Brönstedt- oder Lewissäuren durchgeführt werden. Ganz gleich welche Art der Katalyse gewählt wird, entsteht immer ein temperaturabhängiges Gleichgewicht zwischen den Einsatzstoffen (Säure und Alkohol) und den Produkten (Ester und Wasser). Um das Gleichgewicht zu Gunsten des Esters zu verschieben, kann ein Schleppmittel eingesetzt werden, mit dessen Hilfe das Reaktionswasser aus dem Ansatz entfernt wird. Da die zur Veresterung eingesetzten Alkoholgemische niedriger als die Benzoesäure und deren Ester sieden und mit Wasser eine Mischungslücke aufweisen, werden sie häufig als Schleppmittel eingesetzt, das nach Wasserabtrennung wieder in den Prozess zurückgeführt werden kann.

Das zur Bildung des Esters eingesetzte Gemisch isomerer Alkohole, das gleichzeitig als Schleppmittel dient, wird deshalb im Überschuss, bevorzugt mit einem Überschuss von 5 bis 50 %, insbesondere 10 bis 30 % der zur Bildung des Esters notwendigen Menge eingesetzt.

Als Veresterungskatalysatoren können Säuren, wie beispielsweise Schwefelsäure, Methansulfonsäure oder p-Toluolsulfonsäure, oder Metalle oder deren Verbindungen eingesetzt werden. Geeignet sind z. B. Zinn, Titan, Zirkonium, die als feinverteilte Metalle oder zweckmäßig in Form ihrer Salze, Oxide oder löslichen organischen Verbindungen verwendet werden. Die Metallkatalysatoren sind im Gegensatz zu Protonensäuren Hochtemperaturkatalysatoren, die ihre volle Aktivität oft erst bei Temperaturen oberhalb 180 °C erreichen. Sie werden jedoch bevorzugt eingesetzt, weil sie im Vergleich zur Protonenkatalyse weniger Nebenprodukte, wie beispielsweise Olefine aus dem eingesetzten Alkohol, bilden. Beispielhafte Vertreter für Metallkatalysatoren sind Zinnpulver, Zinn(II)oxid, Zinn(II)oxalat, Titansäureester wie Tetraisopropylorthotitanat oder Tetrabutylorthotitanat sowie Zirkoniumester wie Tetrabutylzirkonat.

Die Katalysatorkonzentration hängt von der Art des Katalysators ab. Bei den bevorzugt eingesetzten Titanverbindungen beträgt diese 0,005 bis 1,0 Massen-% bezogen auf das Reaktionsgemisch, insbesondere 0,01 bis 0,5 Massen-%, ganz besonders 0,01 bis 0,1 Massen-%.

Die Reaktionstemperaturen der Veresterung betragen bei Verwendung von Titankatalysatoren vorzugsweise von 160 °C bis 270 °C, vorzugsweise von 180 bis 250 °C. Die optimalen Temperaturen hängen von den Einsatzstoffen, vom Reaktionsfortschritt und der Katalysatorkonzentration ab. Sie können für jeden Einzelfall durch Versuche leicht ermittelt werden. Höhere Temperaturen erhöhen die Reaktionsgeschwindigkeiten und begünstigen Nebenreaktionen, wie beispielsweise Wasserabspaltung aus Alkoholen oder Bildung farbiger Nebenprodukte. Es ist zur Entfernung des Reaktionswassers günstig, dass der Alkohol aus dem Reaktionsgemisch abdestillieren kann. Die gewünschte Temperatur oder der gewünschte Temperaturbereich kann durch den Druck im Reaktionsgefäß eingestellt werden. Bei niedrig siedenden Alkoholen wird daher die Umsetzung bei Überdruck und bei höher siedenden Alkoholen bei verminderten Druck durchgeführt. Beispielsweise wird bei der Umsetzung von Benzoesäure mit einem Gemisch isomerer Nonanole in einem Temperaturbereich von 170 °C bis 250 °C im Druckbereich von 1 bar bis 10 mbar gearbeitet.

Die in die Reaktion zurückzuführende Flüssigkeitsmenge kann teilweise oder vollständig aus Alkohol bestehen, der durch Aufarbeitung des azeotropen Destillats gewonnen wird. Es ist auch möglich, die Aufarbeitung zu einem späteren Zeitpunkt durchzuführen und die entfernte Flüssigkeitsmenge ganz oder teilweise durch frischen Alkohol, d. h. aus einem im Vorratsgefäß bereitstehenden Alkohol zu ersetzen.

Die Rohestergemische, die neben dem/den Ester(n), Alkohol, Katalysator oder dessen Folgeprodukten und gegebenenfalls Nebenprodukte enthalten, werden nach an sich bekannten Verfahren aufgearbeitet. Die Aufarbeitung umfasst dabei folgende Schritte: Abtrennung des überschüssigen Alkohols und ggf. Leichtsieder, Neutralisation der vorhandenen Säuren, optional eine Wasserdampfdestillation, Umwandlung des Katalysators in einen leicht filtrierbaren Rückstand, Abtrennung der Feststoffe und gegebenenfalls eine Trocknung. Dabei können je nach angewendetem Aufarbeitungsverfahren die Reihenfolge dieser Schritte verschieden sein.

Optional kann das Gemisch der Nonylester aus dem Reaktionsgemisch, gegebenenfalls nach Neutralisation des Ansatzes, destillativ abgetrennt werden.

Alternativ können die erfindungsgemäßen Nonylbenzoate durch Umesterung eines Benzoesäureesters mit einem Isononanolgemisch gewonnen werden. Als Edukte werden Benzoesäureester eingesetzt, deren am O-Atom der Estergruppe gebundenen Alkylreste 1 bis 8 C-Atome aufweisen. Diese Reste können aliphatisch, geradkettig oder verzweigt, alicyclisch oder aromatisch sein. Eine oder mehrere Methylengruppen dieser Alkylreste können durch Sauerstoff substituiert sein. Es ist zweckmäßig, dass die dem Eduktester zugrunde liegenden Alkohole niedriger sieden als das eingesetzte Isononanolgemisch. Bevorzugte Einsatzstoffe für die Umesterung sind Benzoesäuremethylester, Benzoesäureethylester, Benzoesäurepropylester, Benzoesäureisobutylester, Benzoesäureamylester und/oder Benzoesäurebutylester.

Die Umesterung wird katalytisch, beispielsweise mit Brönstedt- oder Lewissäuren oder Basen, durchgeführt. Ganz gleich welcher Katalysator eingesetzt wird, es entsteht immer ein temperaturabhängiges Gleichgewicht zwischen den Einsatzstoffen (Alkylbenzoat und Isononanolgemisch) und den Produkten (Nonylestergemisch und freigesetzter Alkohol). Um das Gleichgewicht zu Gunsten des Isononylestergemisches zu verschieben, wird der aus dem Eduktester entstehende Alkohol aus dem Reaktionsgemisch abdestilliert.

Es ist auch hier zweckmäßig, das Isononanolgemisch im Überschuss einzusetzen.

Als Umesterungskatalysatoren können Säuren, wie beispielsweise Schwefelsäure, Methansulfonsäure oder p-Toluolsulfonsäure, oder Metalle oder deren Verbindungen eingesetzt werden. Geeignet sind z. B. Zinn, Titan, Zirkonium, die als feinverteilte Metalle oder zweckmäßig in Form ihrer Salze, Oxide oder löslichen organischen Verbindungen verwendet werden. Die Metallkatalysatoren sind im Gegensatz zu Protonensäuren Hochtemperaturkatalysatoren, die ihre volle Aktivität erst bei Temperaturen oberhalb 180 °C erreichen. Sie werden jedoch bevorzugt eingesetzt, weil sie im Vergleich zur Protonenkatalyse weniger Nebenprodukte, wie beispielsweise Olefine aus dem eingesetzten Alkohol, bilden. Beispielhafte Vertreter für Metallkatalysatoren sind Zinnpulver, Zinn(II)oxid, Zinn(II)oxalat, Titansäureester wie Tetraisopropylorthotitanat oder Tetrabutylorthotitanat sowie Zirkoniumester wie Tetrabutylzirkonat.
Weiterhin können basische Katalysatoren, wie beispielsweise Oxide, Hydroxide, Hydrogencarbonate, Carbonate oder Alkoholate von Alkali- oder Erdalkalimetallen verwendet werden. Aus dieser Gruppe werden bevorzugt Alkoholate, wie beispielsweise Natriummethylat eingesetzt. Alkoholate können auch in situ aus einem Alkalimetall und einem Nonanol bzw. einem Isononanolgemisch hergestellt werden.

Die Katalysatorkonzentration hängt von der Art des Katalysators ab. Sie beträgt üblicherweise von 0,005 bis 1,0 Massen-% bezogen auf das Reaktionsgemisch.

Die Reaktionstemperaturen für die Umesterung betragen üblicherweise von 100 bis 220 °C. Sie müssen mindestens so hoch sein, dass der aus dem Eduktester entstehende Alkohol bei dem vorgegebenen Druck, meistens Normaldruck, aus dem Reaktionsgemisch abdestillieren kann.

Die Umesterungsgemische können genauso wie für die Veresterungsgemische beschrieben aufgearbeitet werden.

In der erfindungsgemäßen Komposition können neben Benzoesäureisononylester weitere Verbindungen, die als Filmbildehilfsmittel geeignet sind, vorhanden sein. So können erfindungsgemäße Kompositionen als Filmbildehilfsmittel ein Gemisch aus Benzoesäureisononylester und einem oder mehreren Stoffen aus der Gruppe, die Diethylenglycoldibenzoat, Dipropylenglycoldibenzoat, Triethylenglycoldibenzoat, Tripropylenglycoldibenzoat, Diethylenglycolmonobenzoat, Dipropylenglycolmonobenzoat, Triethylenglycolmonobenzoat, Tripropylenglycolmonobenzoat, Benzoesäure-n-butylester, Benzoesäure-isobutylester, Benzoesäure-n-heptylester, Benzoesäure-isoheptylester, Benzoesäure-n-octylester, Benzoesäure-2-ethylhexylester, Benzoesäure-isooctylester, Benzoesäure-n-nonylester, Benzoesäure-n-decylester, Benzoesäureisodecylester, Benzoesäure-2-propylheptylester, Benzoesäure-n-undecylester, Benzoesäure-isoundecylester, Benzoesäure-n-dodecylester, Benzoesäure-isododecylester, Benzoesäure-isotridecylester, Benzoesäure-n-tridecylester, Benzoesäure-C₁₁-C₁₄-alkylester (C₁₃-reich), Dimethylphthalat, Diethylphthalat, Din-propylphthalat, Di-n-butylphthalat, Di-isobutylphthalat, Di-n-pentylphthalat, Diisopentylphthalat, Diisoheptylphthalat, Diisooctylphthalat, Di-2-ethylhexylphthalat, Di-isononylphthalat, Di-isodecylphthalat, Di-2-propylheptylphthalat, Di-n-undecylphthalat, Di-isoundecylphthalat, Diisotridecylphthalat, Diethylenglycolmonomethylether, Diethylenglycolmonoethylether, Diethylenglycolmonopropylether, Diethylenglycolmono-n-butylether, Diethylenglycolmono-iso-butylether, Diethylenglycol-mono-pentylether, Triethylenglycolmonomethylether, Triethylenglycolmonoethylether, Triethylenglycolmonopropylether, Triethylenglycolmono-n-butylether, Triethylenglycolmono-iso-butylether, Triethylenglycol-mono-pentylether, Dipropylenglycolmonomethylether, Dipropylenglycolmonoethylether, Dipropylenglycolmonopropylether, Dipropylenglycolmono-n-butylether, Dipropylenglycolmono-iso-butylether, Dipropylenglycolmono-pentylether, Tripropylenglycolmonomethylether, Tripropylenglycolmonoethylether, Tripropylenglyolmonopropylether, Tripropylenglycolmono-n-butylether, Tripropylenglycolmono-iso-butylether, Tripropylenglycolmono-pentylether, 2,2,4-trimethyl-1,3-pentandiol-monoisobutyrat, 2,2,4-trimethylpentandiol-diisobutyrat, Gemische von Diisobutylestern von Dicarbonsäuren, z.B. LUSOLVAN FBH (BASF AG) oder DBE-IB (DuPont), 2-Ethylhexyl-2-ethylhexanoat umfasst, aufweisen.

Neben den Filmbildehilfsmitteln und Polymeren als Bindemittel können in erfindungsgemäßen Kompositionen zusätzlich Füllstoffe, weitere Additive und/oder Pigmente in einer Menge von vorzugsweise 0,1 bis 50 Massen-%, bevorzugt 1 bis 25 Massen-% und besonders bevorzugt von 10 bis 20 Massen-%, bezogen auf das Trockengewicht des Polymeren, enthalten sein.

An Füllstoffen können z.B. Aluminiumhydroxid, Calciumcarbonat, Calciumsilikat, Cristobalit, Dolomit, Glimmer, Kalkspat, Kaolin, Kieselglas, Kieselgur, Kieselsäure, Kreide, Natrium-Aluminium-Silikat, Quarzmehl, Siliciumdioxid, Schwerspat oder Talkum in den erfindungsgemäßen Kompositionen vorhanden sein.

Als Pigmente können insbesondere Farbpigmente, wie z.B. anorganische Pigmente, wie z.B. Ocker, Umbra, Graphit, synthetische Weißpigmente wie z.B. Titanweiß (TiO₂) synthetische Schwarzpigmente wie z.B. Ruß, synthetische Buntpigmente wie z.B. Zinkgelb, Zinkgrün, Cadmiumrot, Cobaltblau, Ultramarin, Manganviolett, Eisenoxidrot, Chromoxidgrün oder Strontiumgelb, Magnetpigmente oder organische Pigmente, wie z.B. Azofarbstoffe in den erfindungsgemäßen Kompositionen vorhanden sein.

Als weitere Additive können in der erfindungsgemäßen Komposition insbesondere z.B. Verdickungsmittel, Dispergierhilfsmittel, Entschäumungsmittel oder Biozide vorhanden sein. Die Verdickungsmittel werden zur Einstellung der Viskosität der Komposition verwendet. Eingesetzt werden können hierfür beispielsweise Celluloseether, säuregruppenhaltige Copolymerisate, Polyurethan-Verdickungsmittel oder anorganische Systeme wie hochdisperse Kieselsäure. Oft wird, um optimale Eigenschaften hinsichtlich Verarbeitbarkeit, Wasserrückhaltevermögen, Wasserfestigkeit und Lagerstabilität zu erhalten, ein Gemisch aus mehreren verschiedenen Verdickungsmitteln eingesetzt.

Die Dispergierhilfsmittel dienen zur besseren Benetzung von Füllstoffen und Pigmenten. Sie sind insbesondere notwendig, um die Lagerstabilität von erfindungsgemäßen Kompositionen, die Füllstoffe oder Pigmente aufweisen, zu verbessern. Beispiele für einsetzbare Dispergierhilfsmittel sind Verbindungen auf der Basis von Polyphosphaten, Polyacrylsäure und Acetophosphonsäure.

Bedingt durch den hohen Wassergehalt der Dispersionsfarben liegt ein idealer Nährboden für Schimmelpilze und Bakterien vor. Um hier entgegen zu wirken, werden oft Konservierungsmittel eingesetzt. Diese können im Gebinde (sog. Gebindekonservierung) und/oder zum Schutz des Beschichtungsfilmes auf dem Untergrund zugegeben werden. Typisch sind hier Isothiazolinone und sog. Fonnaldehyd-Abspalter.

Dispersionsfarben nach dem heutigen Stand der Technik basieren überwiegend auf Wasser. Zusätzlich in der Komposition befindliche organische Lösemittel wirken in der Regel nur als Verfilmungshilfsmittel. In den erfindungsgemäßen Kompositionen können deshalb neben Wasser z.B. Glykole, aber auch Aliphaten, Alkohole, Aromaten, Ester, Glykolether, Ketone, Testbenzine und Terpenkohlenwasserstoffe als Verfilmungshilfsmittel vorhanden sein.

In Abhängigkeit von der Endanwendung, für die die erfindungsgemäße Komposition eingesetzt werden soll, also z.B. als Lack, Klebstoff oder Dispersionsfarbe, können die erfindungsgemäßen Kompositionen die unterschiedlichsten für diese Zwecke gebräuchlichen Polymere (Bindemittel) aufweisen. Als filmbildende Polymere weist die erfindungsgemäße Zusammensetzung vorzugsweise Homo-, Co- oder Terpolymere von Estern auf, die als Monomere zumindest eine Doppelbindung aufweisen, wobei die Doppelbindung entweder im Carbonsäureteil oder auch im Alkoholteil des monomeren Esters vorgelegen haben kann. Besonders bevorzugt weist die erfindungsgemäße Komposition Polymere auf, die durch Homo-, Co- oder Terpolymerisation von zumindest einem Monomer, ausgewählt aus Vinylestern, Acrylaten oder Methacrylaten erhalten wurden. Geeignete Comonomere sind beispielsweise Ethylen oder Styrol.
Beispiele für Polymere aus Monomeren, bei denen die Doppelbindung im Carbonsäureteil vorliegt, sind solche, die durch Veresterung von ethylenisch ungesättigten Säuren, wie Acryl- oder Methacrylsäure, mit einem Alkohol, der in der Regel eine Kettenlänge von 1 bis 9, insbesondere von 1 bis 4 C-Atome, aufweist, erhalten werden. Die hiervon abgeleiteten Polymere, u.a. Polyacrylate, können optional Wiederholungseinheiten aus ethylenisch ungesättigten Verbindungen wie Ethylen oder Styrol enthalten, beispielsweise also Styrol-Acrylat-Copolymere. Polymerisierbare Ester mit der Doppelbindung in der Alkoholgruppe sind beispielsweise Vinylester wie z.B. Vinylacetat oder Vinylbutyrat. Des weiteren können auch Polymere als Bindemittel in der erfindungsgemäßen Komposition vorhanden sein, die durch Terpolymerisation von Vinylchlorid mit Ethylen und Vinylestern erhalten wurden. Homopolymere des Vinylacetats oder auch Copolymere aus Vinylacetat und Ethylen werden häufig beispielsweise in wässrigen Klebstoffsystemen als Bindemittel verwendet. Für Dispersionsfarben werden häufig als Bindemittel entweder Terpolymerisate aus Vinylacetat, Ethylen und Acrylaten oder Copolymerisate aus Styrol und Acrylsäureestern eingesetzt. In manchen Fällen werden auch Reinacrylate verwendet

Zur Herstellung einer Anstrichfarbe (Dispersionsfarbe) wird die wässrige Dispersion eines filmbildenden Polymeren und/oder Copolymeren und/oder Terpolymeren mit verschiedenen Additiven versetzt. Zu diesen gehören u.a. Verdickungsmittel, Dispergierhilfsmittel, Filmbildehilfsmittel, Füllstoffe, Pigmente, Entschäumungsmittel, Glycole, Biozide etc.

Bevorzugt erfolgt die Herstellung von erfindungsgemäßen Kompositionen durch ein Verfahren zur Erzeugung von Mischungen von filmbildenden Polymeren (Bindemitteln) mit isomeren Nonylbenzoaten, also von erfindungsgemäßen Kompositionen, welches ebenfalls Gegenstand dieser Erfindung ist. Dabei werden die erfindungsgemäßen Kompositionen vorzugsweise hergestellt, in dem zunächst das oder die Filmbildehilfsmittel mit den gegebenenfalls vorhandenen Verdickungsmitteln, Dispergierhilfsmitteln, Füllstoffen, Pigmenten, Entschäumungsmitteln, Glykolen, Bioziden etc. zu einer Dispersion verarbeitet werden. Dies kann z.B. mittels einer Hochgeschwindigkeitsmühle erfolgen. Die so hergestellte Suspension wird dann vorzugsweise mit einem langsam laufenden Mischer unter die wässrige Bindemitteldispersion (Latex) gemischt.

Eine oder mehrere der erfindungsgemäßen Kompositionen können als Anstrichfarbe (Dispersionsfarbe oder Lack), Klebstoff oder zur Herstellung von Anstrichfarben (Dispersionsfarben oder Lacken) oder Klebstoffen verwendet werden. Die Herstellung von Endprodukten wie Dispersionsfarben für den Innen- oder Außenbereich, Lacken oder Klebstoffen erfolgt nach einem dem Fachmann bekannten Verfahren.

Die folgenden Beispiele sollen die Erfindung erläutern, ohne die Anwendungsbreite einzuschränken, die sich aus der Beschreibung und den Patentansprüchen ergibt.

### Beispiele:

### Beispiel 1: Synthese von Isononylbenzoat (INB)

In einem 4-Liter-Destillationskolben mit aufgesetztem Wasserabscheider und Rückflusskühler sowie einem Probenahmestutzen und Thermometer wurden 976 g Benzoesäure (8 Mol), 1728 g Isononanol der Fa. OXENO Olefinchemie GmbH (12 Mol) und 0,59 g Butyltitanat (0,06% bezogen auf die Säuremenge) eingewogen und unter Stickstoffatmosphäre zum Sieden erhitzt. Das bei der Veresterung anfallende Reaktionswasser wurde regelmäßig abgenommen. Als die Säurezahl unter 0,1 mg KOH/g sank, (nach ca. 3 Stunden) wurde der Ansatz zunächst auf unter 60 °C abgekühlt und eine 20 cm Multifillkolonne aufgesetzt Danach wurde der Druck auf 2 mbar verringert und zunächst der überschüssige Alkohol (etwa 120 °C) abdestilliert. Nach der Abtrennung eines Zwischenlaufes bis 140 °C, konnte in einem Bereich von 142 bis 147 °C (bei 2 mbar), gemessen am Kolonnenkopf, das Isononylbenzoat überdestilliert werden. Gaschromatographisch konnte eine Reinheit von > 99,7% ermittelt werden.
Zur Bestimmung des Siedepunktes bzw. Siedebereiches wurde die Substanz in dem Thermosystem FP 800 (Fa. Mettler) in der Messzelle FP 85, die mit dem zentralen Prozessor FP 80 verbunden war, vermessen. Bei einer Start-Temperatur von 100 °C wurde eine Temperaturrampe von 10 °C /min bis 400 °C gefahren. Aus der so erhaltenen DSC-Kurve konnte der Siedebereich des Isononylbenzoates zu 316 bis 326 °C bestimmt werden.

### Beispiel 2: Synthese von 2-Ethylhexylbenzoat (Vergleich)

Analog zu der unter Beispiel 1 durchgeführten Prozedur wurden 12 Mol 2-Ethylhexanol mit 8 Mol Benzoesäure und Tetrabutyltitanat umgesetzt. Nach Destillation (3 mbar, Kopftemperatur 134 °C) wird 2-Ethylhexylbenzoat in einer gaschromatographisch bestimmten Reinheit von 99,7% erhalten

### Beispiel 3: Synthese von Isodecylbenzoat (Vergleich)

In einem 4-Liter-Destillationskolben mit aufgesetztem Wasserabscheider und Rückflusskühler sowie einem Probenahmestutzen und Thermometer wurden 976 g Benzoesäure (8 Mol), 1872 g (12 Mol) Isodecanol (EXXAL 10, Fa. ExxonMobil) und 0,59 g Butyltitanat (0,06% bezogen auf die Säuremenge) eingewogen und unter Stickstoffatmosphäre zum Sieden erhitzt. Das bei der Veresterung anfallende Reaktionswasser wurde regelmäßig abgenommen. Als die Säurezahl nach etwa 3 Stunden unter 0,1 mg KOH/g sank, wurde der überschüssige Alkohol im Vakuum, über eine 10 cm Kolonne mit Raschigringen, abdestilliert. Danach wurde der Ansatz auf 80°C abgekühlt und in einen 4 Liter Reaktionskolben mit Tauchrohr, aufgesetztem Tropftrichter und Kolonne umgefüllt, und an einer Claisenbrücke befestigt. Danach wurde mit 5 Gew.-%iger wässriger Natronlauge neutralisiert ( 10-facher Laugenüberschuss). Anschließend wurde unter Vakuum (10 mbar) auf 190 °C aufgeheizt. Dann wurden über den Tropftricher 8 Gew.-% VE-Wasser, bezogen auf die eingesetzte Menge Rohester, bei konstanter Temperatur zugetropft. Nach Zugabe des Wassers wurde die Heizung abgestellt und unter Vakuum abgekühlt. Der Ester wurde bei Raumtemperatur über eine Nutsche mit Filterpapier und Filterhilfsmittel filtriert. Gaschromatographisch konnte eine Reinheit des Esters von 99,7 % ermittelt werden.

### Beispiel 4: Bestimmung der Flüchtigkeit mittels Thermogravimetrischer Analyse (TGA)

Um eine Aussage über die Flüchtigkeit der Produkte zu erhalten, wurden die nach den Beispielen 1 bis 3 hergestellten Benzoesäureester mit Hilfe der dynamischen TGA-Methode bezüglich ihrer Masseverluste bei höheren Temperaturen verglichen.

Zu diesem Zweck wurden 20 mg einer Probe unter Luftatmosphäre in einer Thermowaage TG 209 der Fa. Netzsch in einem Temperaturbereich von 23 bis 300 °C bei einer dynamischen Temperatursteigerung von 10 K/min in einem Pt-Tiegel (Deckel mit Loch) aufgeheizt und der jeweilige Masseverlust in % bestimmt.

In der untenstehenden Tabelle 1 sind die nicht verdampften Anteile (= 100 % - Masseverlust in %) aufgeführt:

**Tabelle 1:**

| **Temperatur in °C** | **Beispiel 1 (Isononylbenzoat, erfindungsgemäß)** | **Beispiel 2 (2-Ethylhexylbenzoat, Vergleichsbeispiel)** | **Beispiel 3 (Isodecylbenzoat, Vergleichsbeispiel)** |
|---|---|---|---|
| 170 | 99,0 % | 98,1% | 99,2 % |
| 200 | 96,1 % | 93,3% | 97,1 % |
| 240 | 81,2 % | 69,7% | 85,3 % |
| 270 | 45,2 % | 17,3 % | 57,3% |

Die Temperatur, bei der 50% der Probe verdampft sind, beträgt bei Isononylbenzoat 267 °C, bei 2-Ethylhexylbenzoat 255 °C und bei Isodecylbenzoat 275 °C. Die relative Abfolge und die deutlichen Unterschiede stehen im Einklang mit den Erwartungen, dass mit zunehmendem Molekulargewicht die Flüchtigkeit abnimmt.

### Beispiel 5: Einfluss verschiedener Filmbildehilfsmittel auf die Mindestfilmtemperatur (MFT)

Lipaton AE 4620 (Polymer Latex, Marl), eine feindisperse wässrige Dispersion eines Styrol-Acrylsäureester-Copolymerisats mit einem Feststoffanteil von etwa 50%, wird mit den in der Tabelle aufgeführten Mengen (Massen-% bezogen auf die Trockenmasse des Polymeren) an Filmbildehilfsmitteln gemischt. Nach eintägiger Reifezeit erfolgt die Bestimmung der Mindestfilmtemperatur (MFT) in Anlehnung an die DIN ISO 2115. In der letzten Spalte sind die Mindestfilmtemperaturen der wässrigen Dispersion ohne Zugabe von Filmbildehilfsmitteln angegeben.

**Tabelle 2: Bestimmung der MFT nach DIN ISO 2115**

| | Versuch 1 | Versuch 2 (Vergleich) | Versuch 3 (Vergleich) | Lipaton AE 4620 |
|---|---|---|---|---|
| | Isononylbenzoat | 2-Ethylhexylbenzoat | Isodecylbenzoat | Unmodifiziert |
| MFT in °C bei 1 Massen-% Zugabe | 9 | 10 | 11 | 18 |
| MFT in °C bei 3 Massen-% Zugabe | 1 | 0 | 2 | 18 |

In beiden Konzentrationen ist die mit Isononylbenzoat erreichbare MFT etwas niedriger als die mit Isodecylbenzoat. Im Rahmen der Messgenauigkeit (±1 °C) sind 2-Ethylhexylbenzoat und Isononylbenzoat vergleichbar effiziente Filmbildehilfsmittel mit Vorteilen auf Seiten des INB, da bei geringen Konzentrationen eine bessere Absenkung der MFT durch Isononylbenzoat erzielt wird.

### Beispiel 6: Pendeldämpfung nach König zur Bestimmung des Verdunstungsverhaltens.

Die mit 3 Massen-% Filmbildehilfsmittel versetzten Dispersionen des Lipaton AE 4620 (s. Tabelle 2, unterste Zeile) lässt man 24 Stunden im Normklima reifen, trägt diese dann auf Glasplatten in Nassschichtdicken von etwa 200 µm (Schichtdicke im trockenen Film etwa 85 µm) auf und erzeugt so die zu prüfenden Beschichtungen. Anschließend werden die so hergestellten Prüflinge nach verschiedenen Lagerzeiten der Pendeldämfungsprüfung nach König (DIN EN ISO 1522) unterzogen. Bei dieser Prüfung wird ein Pendel, das auf der Oberfläche einer Beschichtung aufliegt, in Schwingung versetzt und die Zeitdauer, in der die Schwingungsamplitude bis zu einem festgesetzten Maß abfällt, gemessen. Je kürzer die Dämpfungsdauer, desto geringer die Härte und desto höher auch noch der Gehalt an Filmbildehilfsmittel. Hiermit erhält man eine Information darüber, wie das Verdunstungsverhalten des Filmbildehilfsmittels aus dem Film ist. Das Filmbildehilfsmittel gilt als verdunstet, wenn die Härte des unmodifizierten Filmes erreicht wird. Die Ergebnisse der Prüfung, also die Zeiten, in der die Auslenkung normgerecht von 6° auf 3° zurück geht, sind in Tabelle 3 aufgeführt.

**Tabelle 3: Ergebnisse zu Beispiel 6: Dämpfungsdauer in Sekunden**

| | Isononylbenzoat | 2-Ethylhexylbenzoat (Vergleich) | Isodecylbenzoat (Vergleich) | Lipaton AE 4620 unmodifiziert |
|---|---|---|---|---|
| Nach 1 Tag bei Raumtemperatur | 4 | 4 | 3 | 39 |
| Nach 10 Tagen bei Raumtemperatur | 6 | 7 | 6 | 45 |
| Nach 6 Tagen bei 50 °C | 36 | 38 | 7 | 49 |

Überraschenderweise wurde gefunden, dass das Verdunstungsverhalten von Isononylbenzoat und 2-Ethylhexylbenzoat aus den entsprechenden Filmen nahezu identisch ist und deutlich besser ist als das des Isodecylbenzoates. Farben bzw. Kompositionen, die Isononylbenzoat und 2-Ethylhexylbenzoat als Filmbildehilfsmitel aufweisen, zeigen deshalb eine schnellere Durchhärtung der Farbe als solche, die Isodecylbenzoat aufweisen. Dies ist insbesondere deshalb überraschend, da die in Beispiel 4 über Thermogravimetrie ermittelten Flüchtigkeiten dieser Benzoate zwischen 2-Ethylhexylbenzoat und Isononylbenzoat einen deutlichen Unterschied hätten erwarten lassen. Durch diese Abweichung von der erwarteten Korrelation lassen sich erfindungsgemäße Kompositionen trotz des im Vergleich zu 2-Ethylhexylbenzoat höheren Siedepunktes schneller aushärten. Wie an Hand von Beispiel 5 gezeigt werden konnte, ist aber die Wirkung des Isononylbenzoats auf die Mindestfilmtemperatur einer Komposition mit der des 2-Ethylhexylbenzoats vergleichbar.

### Beispiel 7: Alternative Synthese von Isononylbenzoat (INB)

In einem 4-Liter-Destillationskolben mit aufgesetztem Wasserabscheider und Rückflusskühler sowie einem Probenahmestutzen und Thermometer wurden 976 g Benzoesäure (8 Mol), 1728 g Isononanol der Fa. OXENO Olefinchemie GmbH (12 Mol) und 0,59 g Butyltitanat (0,06 Gew.-% bezogen auf die Säuremenge) eingewogen und unter Stickstoffatmosphäre zum Sieden erhitzt. Das bei der Veresterung anfallende Reaktionswasser wurde regelmäßig abgenommen. Als die Säurezahl unter 0,1 mg KOH/g sank, (nach ca. 3 Stunden) wurde der Ansatz zunächst auf unter 60 °C abgekühlt und eine 20 cm Füllkörperkolonne aufgesetzt. Danach wurde der Druck auf 2 mbar verringert und zunächst der überschüssige Alkohol (Temperatur am Kolonnenkopf etwa 120 °C) abdestilliert. Danach wurde der Ansatz auf 80 °C abgekühlt und in einen 4 Liter Reaktionskolben mit Tauchrohr, aufgesetztem Tropftrichter und Kolonne umgefüllt, und an einer Claisenbrücke befestigt. Danach wurde mit 5 Gew.-%iger wässriger Natronlauge neutralisiert (5-facher Laugenüberschuss) und noch 30 Minuten gerührt. Anschließend wurde unter Vakuum (ca. 10 mbar) auf 190 °C aufgeheizt. Dann wurden über den Tropftricher 8 Gew.-% vollentsalztes Wasser, bezogen auf die eingesetzte Menge Rohester, bei konstanter Temperatur zugetropft. Dabei wurde darauf geachtet, dass die Kopftemperatur nicht über 120 °C stieg. Nach Zugabe des Wassers wurde die Heizung abgestellt und unter Vakuum abgekühlt. Der Ester wurde bei Raumtemperatur über eine Nutsche mit Filterpapier und Filterhilfsmittel filtriert. Gaschromatographisch konnte eine Reinheit des Esters von 99,7 % ermittelt werden.

## Patentansprüche

1. Komposition, welche eine wässrige Dispersion zumindest eines filmbildenden Polymeren ausgewählt aus Homo-, Co- oder Terpolymeren und zumindest eines Filmbildehilfsmittels aufweist,
**dadurch gekennzeichnet,**
**dass** sie als zumindest ein Filmbildehilfsmittel Benzoesäureisononylester, welches in einer Konzentration von 0,1 bis 30 Massen-% bezogen auf das Trockengewicht des Polymeren vorhanden ist, aufweist.

2. Komposition nach Anspruch 1,
**dadurch gekennzeichnet,**
**dass** sie ein Benzoesäureisononylester aufweist, bei dem die durch Verseifung der isomeren Benzoesäureisononylester erhaltenen Nonylalkohole weniger als 10 Mol % 3,5,5-Trimethylhexanol enthalten.

3. Komposition nach Anspruch 1 oder 2,
**dadurch gekennzeichnet,**
**dass** sie als Filmbildehilfsmittel ein Gemisch aus Benzoesäureisononylester und einem oder mehreren Stoffen aus der Gruppe die Diethylenglycoldibenzoat, Dipropylenglycoldibenzoat, Triethylenglycoldibenzoat, Tripropylenglycoldibenzoat, Diethylenglycolmonobenzoat, Dipropylenglycolmonobenzoat, Triethylenglycolmonobenzoat, Tripropylenglycolmonobenzoat, Benzoesäure-n-butylester, Benzoesäure-isobutylester, Benzoesäure-n-heptylester, Benzoesäure-isoheptylester, Benzoesäure-n-octylester, Benzoesäure-2-ethylhexylester, Benzoesäure-isooctylester, Benzoesäure-n-nonylester, Benzoesäure-n-decylester, Benzoesäureisodecylester, Benzoesäure-2-propylheptylester, Benzoesäure-n-undecylester, Benzoesäure-isoundecylester, Benzoesäure-n-dodecylester, Benzoesäure-isododecylester, Benzoesäure-isotridecylester, Benzoesäure-n-tridecylester, C₁₃-reiche Benzoesäure-C₁₁-C₁₄-alkylester, Dimethylphthalat, Diethylphthalat, Di-n-propylphthalat, Di-n-butylphthalat, Di-isobutylphthalat, Di-n-pentylphthalat, Diisopentylphthalat, Diisoheptylphthalat, Diisooctylphthalat, Di-2-ethylhexylphthalat, Di-isononylphthalat, Di-isodecylphthalat, Di-2-propylheptylphthalat, Di-n-undecylphthalat, Di-isoundecylphthalat, Diisotridecylphthalat, Diethylenglycolmonomethylether, Diethylenglycolmonoethylether, Diethylenglycolmonopropylether, Diethylenglycolmono-n-butylether, Diethylenglycolmono-iso-butylether, Diethylenglycol-mono-pentylether, Triethylenglycolmonomethylether, Triethylenglycolmonoethylether, Triethylenglycolmonopropylether, Triethylenglycolmono-n-butylether, Triethylenglycolmono-iso-butylether, Triethylenglycol-mono-pentylether,Dipropylenglycolmonomethylether, Dipropylenglycolmonoethylether, Dipropylenglycolmonopropylether, Dipropylenglycolmono-n-butylether, Dipropylenglycolmono-iso-butylether, Dipropylenglycol-mono-pentylether, Tripropylenglycolmonomethylether, Tripropylenglycolmonoethylether, Tripropylenglyolmonopropylether, Tripropylenglycolmono-n-butylether, Tripropylenglycolmono-iso-butylether, Triprpropylenglycolmono-pentylether, 2,2,4-trimethyl-1,3-pentandiolmonoisobutyrat, 2,2,4-trimethylpentandiol-diisobutyrat, Gemische von Diisobutylestern von C₄-C₆-Dicarbonsäuren und 2-Ethylhexyl-2-ethylhexanoat umfasst, aufweist.

4. Komposition nach einem der Ansprüche 1 bis 3,
**dadurch gekennzeichnet,**
**dass** in ihr zusätzlich Füllstoffe, Additive und/oder Pigmente in einer Menge von 0,1 bis 50 Massen-%, bezogen auf das Trockengewicht des Polymeren, enthalten sind.

5. Komposition nach einem der Ansprüche 1 bis 4,
**dadurch gekennzeichnet,**
**dass** sie ein Verfilmungshilfsmittel aufweisen.

6. Komposition nach einem der Ansprüche 1 bis 5,
**dadurch gekennzeichnet,**
**dass** sie als Polymere Homo-, Co- oder Terpolymere von ungesättigten Estern aufweisen.

7. Komposition nach Anspruch 6,
**dadurch gekennzeichnet,**
**dass** sie Polymere aufweisen, die durch Homo-, Co- oder Terpolymerisation von zumindest einem Monomer, ausgewählt aus Vinylestern, Acrylaten oder Methacrylaten erhalten wurden.

8. Verwendung einer oder mehrerer der Kompositionen nach zumindest einem der Ansprüche 1 bis 7 als Anstrichfarbe, Klebstoff oder zur Herstellung von Anstrichfarben oder Klebstoffen.

9. Filmbildehilfsmittel zum Einsatz in einer Komposition gemäß einem der Ansprüche 1 bis 7,
**dadurch gekennzeichnet,**
**dass** das Filmbildehilfsmittel ein Benzoesäureisononylester ist.

10. Filmbildehilfsmittel nach Anspruch 9,
**dadurch gekennzeichnet,**
**dass** es ein Benzoesäureisononylester ist, bei dem die durch Verseifung der isomeren Benzoesäureisononylester erhaltenen Nonylalkohole weniger als 10 Mol % 3,5,5-Trimethylhexanol enthalten.

## Claims

1. Composition comprising an aqueous dispersion of at least one film-forming polymer selected from homopolymers and copolymers, including terpolymers, and at least one film-forming agent, **characterized in that** said composition comprises, as at least one film-forming agent, isononyl benzoate, which is present in a concentration of from 0.1 to 30% by mass, based on the dry weight of the polymer.

2. Composition according to Claim 1, **characterized in that** it comprises an isononyl benzoate for which the nonyl alcohols obtained by hydrolyzing the isomeric isononyl benzoates contain less than 10 mol% of 3,5,5-trimethylhexanol.

3. Composition according to Claim 1 or 2, **characterized in that** it comprises as film-forming agent a mixture of isononyl benzoate and one or more substances from the group consisting of diethylene glycol dibenzoate, dipropylene glycol dibenzoate, triethylene glycol dibenzoate, tripropylene glycol dibenzoate, diethylene glycol monobenzoate, dipropylene glycol monobenzoate, triethylene glycol monobenzoate, tripropylene glycol monobenzoate, n-butyl benzoate, isobutyl benzoate, n-heptyl benzoate, isoheptyl benzoate, n-octyl benzoate, 2-ethylhexyl benzoate, isooctyl benzoate, n-nonyl benzoate, n-decyl benzoate, isodecyl benzoate, 2-propylheptyl benzoate, n-undecyl benzoate, isoundecyl benzoate, n-dodecyl benzoate, isododecyl benzoate, isotridecyl benzoate, n-tridecyl benzoate, C₁₃-rich C₁₁-C₁₄-alkyl benzoates, dimethyl phthalate, diethyl phthalate, di-n-propyl phthalate, di-n-butyl phthalate, diisobutyl phthalate, di-n-pentyl phthalate, diisopentyl phthalate, diisoheptyl phthalate, diisooctyl phthalate, di-2-ethylhexyl phthalate, diisononyl phthalate, diisodecyl phthalate, di-2-propylheptyl phthalate, di-n-undecyl phthalate, diisoundecyl phthalate, diisotridecyl phthalate, diethylene glycol monomethyl ether, diethylene glycol monoethyl ether, diethylene glycol monopropyl ether, diethylene glycol mono-n-butyl ether, diethylene glycol monoisobutyl ether, diethylene glycol monopentyl ether, triethylene glycol monomethyl ether, triethylene glycol monoethyl ether, triethylene glycol monopropyl ether, triethylene glycol mono-n-butyl ether, triethylene glycol monoisobutyl ether, triethylene glycol monopentyl ether, dipropylene glycol monomethyl ether, dipropylene glycol monoethyl ether, dipropylene glycol monopropyl ether, dipropylene glycol mono-n-butyl ether, dipropylene glycol monoisobutyl ether, dipropylene glycol monopentyl ether, tripropylene glycol monomethyl ether, tripropylene glycol monoethyl ether, tripropylene glycol monopropyl ether, tripropylene glycol mono-n-butyl ether, tripropylene glycol monoisobutyl ether, tripropylene glycol monopentyl ether, 2,2,4-trimethyl-1,3-pentanediol monoisobutyrate, 2,2,4-trimethylpentanediol diisobutyrate, mixtures of diisobutyl esters of C₄-C₆ dicarboxylic acids, and 2-ethylhexyl 2-ethylhexanoate.

4. Composition according to any one of Claims 1 to 3, **characterized in that** it further comprises fillers, additives and/or pigments in an amount of from 0.1 to 50% by mass, based on the dry weight of the polymer.

5. Composition according to any one of Claims 1 to 4, **characterized in that** it comprises a filming auxiliary.

6. Composition according to any one of Claims 1 to 5, **characterized in that** it comprises as polymers homopolymers or copolymers (including terpolymers) of unsaturated esters.

7. Composition according to Claim 6, **characterized in that** it comprises polymers obtained by homopolymerization or copolymerization (including terpolymerization) of at least one monomer selected from vinyl esters, acrylates, and methacrylates.

8. Use of one or more than one composition according to at least one of Claims 1 to 7 as a paint or adhesive or for producing a paint or adhesive.

9. Film-forming agent for use in a composition according to any one of Claims 1 to 7, **characterized in that** said film-forming agent is an isononyl benzoate.

10. Film-forming agent according to Claim 9, **characterized in that** it is an isononyl benzoate for which the nonyl alcohols obtained by hydrolyzing the isomeric isononyl benzoates contain less than 10 mol% of 3,5,5-trimethylhexanol.

## Revendications

1. Composition qui comprend une dispersion aqueuse d'au moins un polymère filmogène choisi parmi les homo-, les co- ou les terpolymères, et d'au moins un auxiliaire de formation du feuil, **caractérisée en ce qu'**elle contient, en tant qu'au moins un auxiliaire de formation du feuil, du benzoate d'isononyle, qui est présent en une concentration de 0,1 à 30 % en masse par rapport au poids sec du polymère.

2. Composition selon la revendication 1, **caractérisée en ce qu'**elle comprend un benzoate d'isononyle dans lequel les alcools nonyliques obtenus par saponification des benzoates d'isononyle isomères contiennent moins de 10 % en moles de 3,5,5-triméthylhexanol.

3. Composition selon la revendication 1 ou 2, **caractérisée en ce qu'**elle comprend, en tant qu'auxiliaire de formation du feuil, un mélange de benzoate d'isononyle et d'une ou plusieurs substances du groupe qui comprend le dibenzoate de diéthylèneglycol, le dibenzoate de dipropylèneglycol, le dibenzoate de triéthylèneglycol, le dibenzoate de tripropylèneglycol, le monobenzoate de diéthylèneglycol, le monobenzoate de dipropylèneglycol, le monobenzoate de triéthylèneglycol, le monobenzoate de tripropylèneglycol, le benzoate de n-butyle, le benzoate d'isobutyle, le benzoate de n-heptyle, le benzoate d'isoheptyle, le benzoate de n-octyle, le benzoate de 2-éthylhexyle, le benzoate d'isooctyle, le benzoate de n-nonyle, le benzoate de n-décyle, le benzoate d'isodécyle, le benzoate de 2-propylheptyle, le benzoate de n-undécyle, le benzoate d'isoundécyle, le benzoate de n-dodécyle, le benzoate d'isododécyle, le benzoate d'isotridécyle, le benzoate de n-tridécyle, les benzoates d'alkyle en C₁₁-C₁₄ riche en C₁₃, le phtalate de diméthyle, le phtalate d'isoéthyle, le phtalate de di-n-propyle, le phtalate de di-n-butyle, le phtalate de diisobutyle, le phtalate de di-n-pentyle, le phtalate de diisopentyle, le phtalate de diisoheptyle, le phtalate de diisooctyle, le phtalate de di-2-éthylhexyle, le phtalate de dïisononyle, le phtalate de diisodécyle, le phtalate de di-2-propylheptyle, le phtalate de di-n,-undécyle, le phtalate de diisoundécyle, le phtalate de diisotridécyle, l'éther monométhylique du diéthylèneglycol, l'éther monoéthylique du diéthylèneglycol, l'éther monopropylique du diéthylèneglycol, l'éther mono-n-butylique du diéthylèneglycol, l'éther monoisobutylique du diéthylèneglycol, l'éther monopentylique du diéthylèneglycol, l'éther monométhylique du triéthylèneglycol, l'éther monoéthylique du triéthylèneglycol, l'éther monopropylique du triéthylèneglycol, l'éther mono-n-butylique du triéthylèneglycol, l'éther monoisobutylique du triéthylèneglycol, l'éther monopentylique du triéthylèneglycol, l'éther monométhylique du dipropylèneglycol, l'éther monoéthylique du dipropylèneglycol, l'éther monopropylique du dipropylèneglycol, l'éther mono-n-butylique du dipropylèneglycol, l'éther monoisobutylique du dipropylèneglycol, l'éther monopentylique du dipropylèneglycol, l'éther monométhylique du tripropylèneglycol, l'éther monoéthylique du tripropylèneglycol, l'éther monopropylique du tripropylèneglycol, l'éther mono-n-butylique du tripropylèneglycol, l'éther monoisobutylique du tripropylèneglycol, l'éther monopentylique du tripropylèneglycol, le monoisobutyrate de 2,2,4-triméthyl-1,3-pentanediol, le diisobutyrate de 2,2,4-triméthylpenanediol, les mélanges d'esters diisobutyliques d'acides dicarboxyliques en C₄-C₆, et le 2-éthylhexanoate de 2-éthylhexyle.

4. Composition selon l'une des revendications 1 à 3, **caractérisée en ce qu'**elle contient en outre des matières de charge, des additifs et des pigments, en une quantité de 0,1 à 50 % en masse par rapport au poids sec du polymère.

5. Composition selon l'une des revendications 1 à 4, **caractérisée en ce qu'**elle comprend un auxiliaire de formation du feuil.

6. Composition selon l'une des revendications 1 à 5, **caractérisée en ce qu'**elle comprend en tant que polymères des homo-, des co- ou des terpolymères d'esters insaturés.

7. Composition selon la revendication 6, **caractérisée en ce qu'**elle comprend des polymères qui ont été obtenus par homo-, co- ou terpolymérisation d'au moins un monomère choisi parmi les esters vinyliques, les acrylates ou les méthacrylates.

8. Utilisation d'une ou plusieurs des compositions selon au moins l'une des revendications 1 à 7 en tant que peinture, adhésif, ou pour fabriquer des peintures ou des adhésifs.

9. Auxiliaire de formation du feuil pour utilisation dans une composition selon l'une des revendications 1 à 7, **caractérisé en ce que** l'auxiliaire de formation du feuil est un benzoate d'isononyle.

10. Auxiliaire de formation du feuil selon la revendication 9, **caractérisé en ce qu'**il s'agit d'un benzoate d'isononyle dans lequel les alcools nonyliques obtenus par saponification des benzoates d'isononyle isomères contiennent moins de 10 % en moles de 3,5,5-triméthylhexanol.
